# EUROPEAN PATENT APPLICATION

(11) **EP 4 827 023 A1**
(43) Date of publication of application: **21.10.2026**
(21) Application number: 25741339.3
(22) Date of filing: 02.01.2025
(51) Int. Cl.: H04L 1/00

(54) **DATA PROCESSING METHOD, APPARATUS, AND SYSTEM**

(30) Priority: 16.01.2024 CN 202410066220
(71) Applicant: Huawei Technologies Co., Ltd., Shenzhen, Guangdong 518129 (CN)
(72) Inventor: HE, Xiang, Shenzhen, Guangdong 518129 (CN); MI, Guangcan, Shenzhen, Guangdong 518129 (CN); REN, Hao, Shenzhen, Guangdong 518129 (CN); WANG, Xiaodong, Shenzhen, Guangdong 518129 (CN); SUN, Changxing, Shenzhen, Guangdong 518129 (CN)
(74) Representative: Huawei European IPR
(86) International application number: PCT/CN2025/070041
(87) International publication number: WO 2025/152776

(57) **Abstract**

Embodiments of this application disclose a data processing method, an apparatus, and a system. A host chip supports multiple FEC schemes for performing data processing on data, and specifically determines, based on a type of an optical module connected to the host chip, a FEC scheme for data processing. For example, if the type of the optical module is an LPO module, an NPO module, or a CPO module, the host chip performs data processing using a first FEC scheme. For another example, if the type of the optical module is a normal optical module, the host chip performs data processing using a second FEC scheme. In other words, in this application, the FEC scheme used by the host chip can be flexibly selected based on the type of the optical module, facilitating targeted configuration of a corresponding FEC scheme based on actual bit error performance of the optical module, thereby ensuring transmission efficiency and reliability in various scenarios without requiring additional hardware.

## Description

This application claims priority to Chinese Patent Application No. 202410066220.8, filed with the China National Intellectual Property Administration on January 16, 2024 and entitled "DATA PROCESSING METHOD, APPARATUS, AND SYSTEM", which is incorporated herein by reference in its entirety.

### TECHNICAL FIELD

This application relates to the field of data communication, and in particular, to a data processing method, an apparatus, and a system.

### BACKGROUND

Power consumption is closely related to the operating cost of communication network devices, and reducing energy consumption per bit of transmission has therefore remained a persistent industry goal, with continuous improvements being made as technologies advance. In optical transmission over Ethernet, power consumption of currently used normal optical modules (normal optical module) is non-negligible. To further reduce power consumption, a technical solution known as linear pluggable optics (linear pluggable optics or linear-drive pluggable optics, LPO) modules has been proposed.

Compared with the normal optical modules, the LPO modules remove digital processing functions that account for a high proportion of power consumption, and instead complete necessary digital processing functions within a main chip. In this way, overall power consumption of a transmission system is significantly reduced, and the LPO modules are less costly. The LPO modules can significantly reduce power consumption, but this comes at the cost that bit error performance of the system is worse than that of the normal optical modules. As a result, more erroneous data frames are received and more retransmissions are required, thereby reducing transmission reliability and efficiency.

### SUMMARY

This application provides a data processing method, an apparatus, and a system. A host chip supports multiple FEC schemes for performing data processing on data, and can flexibly select, based on a type of an optical module, a FEC scheme used by the host chip, facilitating targeted configuration of corresponding FEC scheme based on actual bit error performance of the optical module, thereby ensuring data transmission efficiency and reliability in various scenarios.

According to a first aspect, this application provides a data processing method, applied to a transmitter device. Specifically, a type of an optical module connected to a host chip is first obtained. Then, a forward error correction (forward error correction, FEC) scheme for performing data processing on to-be-transmitted data is determined based on the type of the optical module. If the type of the optical module is a linear pluggable optical (linear pluggable optics or linear-drive pluggable optics, LPO) module, a near package optical (near package optics, NPO) module, or a co-packaged optics (co-packaged optics, CPO) module, the host chip performs data processing on the to-be-transmitted data using a first FEC scheme.

In this implementation, the host chip supports multiple FEC schemes for performing data processing on data, and specifically determines, based on the type of the optical module connected to the host chip, a FEC scheme for performing data processing. For example, if the type of the optical module is an LPO module, an NPO module, or a CPO module, the host chip performs data processing using the first FEC scheme. For another example, if the type of the optical module is a normal optical module, the host chip performs data processing using a second FEC scheme. In other words, in this application, the FEC scheme used by the host chip can be flexibly selected based on the type of the optical module, facilitating targeted configuration of a corresponding FEC scheme based on actual bit error performance of the optical module, thereby ensuring transmission efficiency and reliability in various scenarios without requiring additional hardware.

In some possible implementations, that the host chip performs data processing on the to-be-transmitted data using the first FEC scheme includes: The host chip performs data processing on the to-be-transmitted data using a multi-way codeword interleaving FEC scheme. It should be understood that, increasing an interleaving depth of a codeword can better resist burst bit errors, and reliability of data transmission can be ensured.

In some possible implementations, the multi-way interleaving FEC scheme is a 2-way codeword interleaving FEC scheme, a 4-way codeword interleaving FEC scheme, or an 8-way codeword interleaving FEC scheme, thereby extending implementation scenarios of this solution.

In some possible implementations, that the host chip performs data processing on the to-be-transmitted data using the first FEC scheme includes: The host chip encodes the to-be-transmitted data using a first FEC code. It should be understood that, flexibly adjusting a FEC code based on an actual situation can better adapt to requirements of different scenarios. For example, in a scenario with relatively good link quality, a transmission delay can be reduced by adjusting the FEC code.

In some possible implementations, the first FEC code is Reed-Solomon (Reed-Solomon, RS) (544,514) or RS (528,514), thereby enriching implementations of this solution.

In some possible implementations, if the type of the optical module is an LPO module, an NPO module, or a CPO module, the method further includes: initiating auto-negotiation to a receiver device, to indicate a host chip of the receiver device to perform data processing on received data using the first FEC scheme. In other words, if the host chip of the transmitter device determines the first FEC scheme for performing data processing on the to-be-transmitted data, the transmitter device needs to perform auto-negotiation with the receiver device, so that the receiver device performs data processing on the received data also using the first FEC scheme. This helps the receiver device better recover data from the transmitter device.

In some possible implementations, performing auto-negotiation with the receiver device includes: sending a link codeword to the receiver device, where the link codeword includes an indication field, and the indication field indicates the host chip of the receiver device to perform data processing on the received data using the first FEC scheme. This implementation provides a specific implementation of auto-negotiation, and has relatively good practicability.

In some possible implementations, the indication field is located in a base page and/or a next page in the link codeword, thereby improving implementability of the solution.

In some possible implementations, the indication field is located in a FEC capacity field of the base page.

In some possible implementations, a rate at which the link codeword is transmitted is 106.25/X gigabits per second (gigabits per second, Gbps), and X is an integer greater than or equal to 1.

In some possible implementations, if the type of the optical module is an LPO module, an NPO module, or a CPO module, the method further includes: initiating link training to a receiver device, to indicate a host chip of the receiver device to perform data processing on received data using the first FEC scheme. In other words, if the host chip of the transmitter device determines the first FEC scheme for performing data processing on the to-be-transmitted data, the transmitter device needs to perform link training with the receiver device, so that the receiver device performs data processing on the received data also using the first FEC scheme. This helps the receiver device better recover data from the transmitter device.

In some possible implementations, performing link training with the receiver device includes: sending a training frame to the receiver device, where the training frame includes an indication field, and the indication field indicates the host chip of the receiver device to perform data processing on the received data using the first FEC scheme. This implementation provides a specific implementation of link training, and has relatively good practicability.

In some possible implementations, the indication field is located in a coefficient update field, a status report field, a control field, and/or a status field in the training frame, thereby improving implementability of the solution.

In some possible implementations, a rate at which the training frame is transmitted is 106.25 Gbps or 103.125 Gbps.

In some possible implementations, the method further includes: receiving auto-negotiation or link training initiated by the receiver device, where a type of a receiver optical module connected to the receiver host chip of the receiver device is an LPO module, an NPO module, or a CPO module, and the auto-negotiation or the link training initiated by the receiver device indicates the host chip to perform data processing on the to-be-transmitted data using the first FEC scheme. In other words, auto-negotiation or link training between the transmitter device and the receiver device is mutual. The local end may determine, based on the type of the optical module used by the local end and the auto-negotiation or the link training initiated by the peer end, the FEC scheme to be used, so that the transmitter and the receiver can select a more appropriate FEC scheme.

In some possible implementations, the method further includes: if the host chip is connected to a normal optical module, the host chip performs data processing on the to-be-transmitted data using the second FEC scheme, where the normal optical module is not an LPO module, an NPO module, or a CPO module.

In some possible implementations, that the host chip performs data processing on the to-be-transmitted data using the second FEC scheme includes: The host chip performs data processing on the to-be-transmitted data using a FEC scheme without codeword interleaving.

In some possible implementations, that the host chip performs data processing on the to-be-transmitted data using the second FEC scheme includes: The host chip encodes the to-be-transmitted data using a second FEC code.

In some possible implementations, the host chip sends data to the optical module via one lane.

In some possible implementations, the host chip respectively sends N streams of data to the optical module via N lanes, where N is an integer greater than 1. That the host chip performs data processing on the to-be-transmitted data using the first FEC scheme includes: The host chip performs data processing on a streams of to-be-transmitted data among the N streams of to-be-transmitted data using the first FEC scheme, where 1≤a≤N. The method further includes: The host chip performs data processing on b streams of to-be-transmitted data among the N streams of to-be-transmitted data using the second FEC scheme, where N=a+b.

In some possible implementations, the lane is an attachment unit interface (attachment unit interface, AUI) or a common electrical interface (common electrical interface or Common Electrical I/O, CEI).

In some possible implementations, the method further includes: receiving c streams of data that are sent by the receiver host chip of the receiver device after the c streams of data have been processed using the first FEC scheme, where c≥1; and/or receiving d streams of data that are sent by the receiver host chip of the receiver device after the d streams of data have been processed using the second FEC scheme, where d≥1.

In some possible implementations, a rate of each channel of data to be transmitted by the host chip is 100 Gbps.

In some possible implementations, the type of the optical module is an LPO module, a type of a receiver optical module connected to a receiver host chip of the receiver device is an LPO module, and the method further includes: receiving data that is sent by the receiver host chip after data processing has been performed using the first FEC scheme; or the type of the optical module is an LPO module, a type of a receiver optical module connected to a receiver host chip of the receiver device is a normal optical module, and the method further includes: receiving data that is sent by the receiver host chip after data processing has been performed using the second FEC scheme.

In some possible implementations, the host chip respectively sends N streams of data to the optical module via N lanes, where the type of the optical module is an LPO module, the N lanes are CEIs, and N=2, 4, 8, or 16. That the host chip performs data processing on the to-be-transmitted data using the first FEC scheme includes: The host chip performs data processing on the N streams of to-be-transmitted data using the first FEC scheme.

In some possible implementations, the receiver device includes N receiver host chips, a type of a receiver optical module connected to each of the receiver host chips is an LPO module, and the method further includes: receiving N streams of data that are respectively sent by the N receiver host chips after data processing has been performed using the first FEC scheme; or the receiver device includes N receiver host chips, a type of a receiver optical module connected to each of the receiver host chips is a normal optical module, and the method further includes: receiving N streams of data that are respectively sent by the N receiver host chips after data processing has been performed using the second FEC scheme.

In some possible implementations, the host chip respectively sends N streams of data to the optical module via N lanes, where the optical module is an LPO module, and N is 2, 4, 8, or 16. That the host chip performs data processing on the to-be-transmitted data using the first FEC scheme includes: The host chip performs data processing on M streams of to-be-transmitted data among the N streams of to-be-transmitted data using the first FEC scheme, where 1≤M<N. The method further includes: The host chip performs data processing on N-M streams of to-be-transmitted data among the N streams of to-be-transmitted data using the second FEC scheme.

In some possible implementations, the receiver device includes N receiver host chips, a type of a receiver optical module connected to the M receiver host chips is an LPO module, and a type of a receiver optical module connected to the N-M receiver host chips is a normal optical module. The method further includes: receiving M streams of data that are respectively sent by the M receiver host chips after the M streams of data have been processed using the first FEC scheme; and receiving N-M streams of data that are respectively sent by the N-M receiver host chips after the N-M streams of data have been processed using the second FEC scheme.

In some possible implementations, a transmission rate in each of the N lanes is 100 Gbps.

According to a second aspect, this application provides a data processing method, applied to a transmitter device. Specifically, a host chip in the transmitter device is connected to a normal optical module, and a FEC scheme used for performing data processing on to-be-transmitted data by the host chip may be determined based on the normal optical module. Further, the host chip initiates auto-negotiation or a link training to a receiver device, to indicate the receiver device to perform data processing on received data using the FEC scheme.

In this implementation, the transmitter device determines, based on the used normal optical module, the FEC scheme for performing data processing on the to-be-transmitted data, and initiates auto-negotiation or link training to the receiver device, so that the receiver device performs data processing on the received data also using the FEC scheme. This helps the receiver device better recover data from the transmitter device.

In some possible implementations, initiating auto-negotiation to the receiver device includes: sending a link codeword to the receiver device, where the link codeword includes an indication field, and the indication field indicates a host chip of the receiver device to perform data processing on the received data using the FEC scheme.

In some possible implementations, the indication field is located in a base page and/or a next page in the link codeword.

In some possible implementations, the indication field is located in a FEC capacity field of the base page.

In some possible implementations, a rate at which the link codeword is transmitted is 106.25/X Gbps, where X is an integer greater than or equal to 1.

In some possible implementations, initiating link training to the receiver device includes: sending a training frame to the receiver device, where the training frame includes an indication field, and the indication field indicates the host chip of the receiver device to perform data processing on the received data using the FEC scheme.

In some possible implementations, the indication field is located in a coefficient update field, a status report field, a control field, and/or a status field in the training frame.

In some possible implementations, a rate at which the training frame is transmitted is 106.25 Gbps or 103.125 Gbps.

In some possible implementations, the method further includes: receiving auto-negotiation or link training initiated by the receiver device, where a type of a receiver optical module connected to the receiver host chip of the receiver device is a normal optical module, and the auto-negotiation or the link training initiated by the receiver device indicates the host chip to perform data processing on the to-be-transmitted data using the FEC scheme.

According to a third aspect, this application provides a data processing method, applied to a receiver device. Specifically, auto-negotiation or link training initiated by a transmitter device is received. Then, a FEC scheme used for performing data processing on received data by a host chip is determined based on the auto-negotiation or link training. Further, a feedback message is sent to the transmitter device, where the feedback message indicates the FEC scheme.

In this implementation, the receiver device may determine, based on the auto-negotiation or the link training initiated by the transmitter device, the FEC scheme used for performing data processing on the received data by the host chip, so that the receiver device can perform data processing on the received data using the same FEC scheme as the transmitter device, thereby helping the receiver device better recover data from the transmitter device.

In some possible implementations, receiving auto-negotiation initiated by the transmitter device includes: receiving a first link codeword sent by the transmitter device, where the first link codeword includes a first indication field. Determining, based on the auto-negotiation, the FEC scheme used for performing data processing on the received data by the host chip includes: determining the FEC scheme based on the first indication field.

In some possible implementations, the first indication field is located in a base page and/or a next page in the first link codeword.

In some possible implementations, the first indication field is located in a FEC capacity field of the base page in the first link codeword.

In some possible implementations, sending the feedback message to the transmitter device includes: sending a second link codeword to the transmitter device, where the second link codeword includes a second indication field, and the second indication field indicates the FEC scheme.

In some possible implementations, the second indication field is located in a base page and/or a next page in the second link codeword.

In some possible implementations, the second indication field is located in an ACK field of the base page in the second link codeword, and/or the second indication field is located in an ACK field of the next page in the second link codeword.

In some possible implementations, a rate at which the first link codeword is transmitted is 106.25/X Gbps, where X is an integer greater than or equal to 1.

In some possible implementations, receiving link training initiated by the transmitter device includes: receiving a first training frame sent by the transmitter device, where the first training frame includes a third indication field. Determining, based on the link training, the FEC scheme used for performing data processing on the received data by the host chip includes: determining the FEC scheme based on a third indication field.

In some possible implementations, the third indication field is located in a coefficient update field, a status report field, a control field, and/or a status field in the first training frame.

In some possible implementations, sending the feedback message to the transmitter device includes: sending a second training frame to the transmitter device, where the second training frame includes a fourth indication field, and the fourth indication field indicates the FEC scheme.

In some possible implementations, a rate at which the first training frame is transmitted is 106.25 Gbps or 103.125 Gbps.

In some possible implementations, if a type of a transmitter optical module connected to a transmitter host chip in the transmitter device is an LPO module, an NPO module, or a CPO module, the FEC scheme is a first FEC scheme; and if the type of the transmitter optical module connected to the transmitter host chip in the transmitter device is a normal optical module, the FEC scheme is a second FEC scheme.

In some possible implementations, the method further includes: initiating auto-negotiation or link training to the transmitter device, to indicate a FEC scheme used for performing data processing on the received data by the transmitter host chip of the transmitter device.

In some possible implementations, if the type of the optical module connected to the host chip is an LPO module, an NPO module, or a CPO module, the auto-negotiation or the link training initiated to the transmitter device indicates the transmitter host chip to perform data processing on the received data using the first FEC scheme; and if the type of the optical module connected to the host chip is a normal optical module, the auto-negotiation or the link training initiated to the transmitter device indicates the transmitter host chip to perform data processing on the received data using the second FEC scheme.

In some possible implementations, the first FEC scheme includes at least one of a multi-way codeword de-interleaving FEC scheme and a decoding method in which a first FEC code is used, and the second FEC scheme includes at least one of a FEC scheme without codeword de-interleaving and a decoding method in which a second FEC code is used.

According to a fourth aspect, this application provides a communication apparatus. The communication apparatus includes a processing unit and a host chip. The processing unit is configured to: obtain a type of an optical module connected to the host chip; and determine, based on the type of the optical module, a FEC scheme for performing data processing on to-be-transmitted data. If the type of the optical module is an LPO module, an NPO module, or a CPO module, the host chip is configured to perform data processing on the to-be-transmitted data using a first FEC scheme.

In some possible implementations, the host chip is specifically configured to perform data processing on the to-be-transmitted data using a multi-way codeword interleaving FEC scheme.

In some possible implementations, the multi-way interleaving FEC scheme is a 2-way codeword interleaving FEC scheme, a 4-way codeword interleaving FEC scheme, or an 8-way codeword interleaving FEC scheme.

In some possible implementations, the host chip is specifically configured to encode the to-be-transmitted data using a first FEC code.

In some possible implementations, the first FEC code is RS (544,514) or RS (528,514).

In some possible implementations, if the type of the optical module is an LPO module, an NPO module, or a CPO module, the processing unit is further configured to initiate auto-negotiation to a receiver device, to indicate a host chip of the receiver device to perform data processing on received data using the first FEC scheme.

In some possible implementations, the processing unit is specifically configured to send a link codeword to the receiver device, where the link codeword includes an indication field, and the indication field indicates the host chip of the receiver device to perform data processing on the received data using the first FEC scheme.

In some possible implementations, the indication field is located in a base page and/or a next page in the link codeword, thereby improving implementability of the solution.

In some possible implementations, the indication field is located in a FEC capacity field of the base page.

In some possible implementations, a rate at which the link codeword is transmitted is 106.25/X Gbps, where X is an integer greater than or equal to 1.

In some possible implementations, if the type of the optical module is an LPO module, an NPO module, or a CPO module, the processing unit is further configured to initiate link training to the receiver device, to indicate the host chip of the receiver device to perform data processing on the received data using the first FEC scheme.

In some possible implementations, the processing unit is specifically configured to send a training frame to the receiver device, where the training frame includes an indication field, and the indication field indicates the host chip of the receiver device to perform data processing on the received data using the first FEC scheme.

In some possible implementations, the indication field is located in a coefficient update field, a status report field, a control field, and/or a status field in the training frame.

In some possible implementations, a rate at which the training frame is transmitted is 106.25 Gbps or 103.125 Gbps.

In some possible implementations, the processing unit is further configured to receive auto-negotiation or link training initiated by the receiver device, where a type of a receiver optical module connected to the receiver host chip of the receiver device is an LPO module, an NPO module, or a CPO module, and the auto-negotiation or the link training initiated by the receiver device indicates the host chip to perform data processing on to-be-transmitted data using the first FEC scheme.

In some possible implementations, if the host chip is connected to a normal optical module, the host chip is further configured to perform data processing on the to-be-transmitted data using a second FEC scheme.

In some possible implementations, the host chip is specifically configured to perform data processing on the to-be-transmitted data using a FEC scheme without codeword interleaving.

In some possible implementations, the host chip is specifically configured to encode the to-be-transmitted data using a second FEC code.

In some possible implementations, the host chip sends data to the optical module via one lane.

In some possible implementations, the host chip respectively sends N streams of data to the optical module via N lanes, where N is an integer greater than 1. The host chip is specifically configured to perform data processing on a streams of data among the N streams of to-be-transmitted data using the first FEC scheme, where 1≤a≤N. The host chip is further configured to perform data processing on b streams of to-be-transmitted data among the N streams of to-be-transmitted data using the second FEC scheme, where N=a+b.

In some possible implementations, the lane is an AUI or a CEI.

In some possible implementations, the communication apparatus further includes a transceiver unit. The transceiver unit is configured to: receive c streams of data that are transmitted by the receiver host chip of the receiver device after data processing has been performed using the first FEC scheme, where c≥1; and/or receive d streams of data that are transmitted by the receiver host chip of the receiver device after data processing has been performed using the second FEC scheme, where d≥1.

In some possible implementations, a rate of each channel of data to be transmitted by the host chip is 100 Gbps.

In some possible implementations, the communication apparatus further includes the transceiver unit. The type of the optical module is an LPO module, the type of the receiver optical module connected to the receiver host chip of the receiver device is an LPO module, and the transceiver unit is configured to receive data that is sent by the receiver host chip after data processing has been performed using the first FEC scheme. Alternatively, the type of the optical module is an LPO module, the type of the receiver optical module connected to the receiver host chip of the receiver device is a normal optical module, and the transceiver unit is configured to receive data that is sent by the receiver host chip after data processing has been performed using the second FEC scheme.

In some possible implementations, the host chip respectively sends N streams of data to the optical module via N lanes, where the type of the optical module is an LPO module, the N lanes are CEIs, and N=2, 4, 8, or 16. The processing unit is specifically configured to perform data processing on the N streams of to-be-transmitted data using the first FEC scheme.

In some possible implementations, the communication apparatus further includes the transceiver unit. The receiver device includes N receiver host chips, a type of a receiver optical module connected to each of the receiver host chips is an LPO module, and the transceiver unit is configured to receive N streams of data that are respectively sent by the N receiver host chips after data processing has been performed using the first FEC scheme. Alternatively, the receiver device includes N receiver host chips, a type of a receiver optical module connected to each of the receiver host chips is a normal optical module, and the transceiver unit is configured to receive N streams of data that are respectively sent by the N receiver host chips after data processing has been performed using the second FEC scheme.

In some possible implementations, the host chip respectively sends N streams of data to the optical module via N lanes, where the type of the optical module is an LPO module, and the processing unit is specifically configured to perform data processing on M streams of to-be-transmitted data among the N streams of to-be-transmitted data using the first FEC scheme, where 1≤M<N. The processing unit is further configured to perform data processing on N-M streams of to-be-transmitted data among the N streams of to-be-transmitted data using the second FEC scheme.

In some possible implementations, the communication apparatus further includes the transceiver unit. The receiver device includes N receiver host chips, a type of a receiver optical module connected to M receiver host chips is an LPO module, and a type of a receiver optical module connected to the N-M receiver host chips is a normal optical module. The transceiver unit is configured to: receive M streams of data that are respectively transmitted by the M receiver host chips after data processing has been performed using the first FEC scheme; and receive N-M streams of data that are respectively transmitted by N-M receiver host chips after data processing has been performed using the second FEC scheme.

In some possible implementations, a transmission rate in each of the N lanes is 100 Gbps.

According to a fifth aspect, this application provides a communication apparatus. The communication apparatus includes a processing unit and a host chip. The host chip is connected to a normal optical module. The processing unit is configured to: determine, based on the normal optical module, a FEC scheme used for performing data processing on to-be-transmitted data by the host chip; and initiate auto-negotiation or a link training to a receiver device, to indicate the receiver device to perform data processing on received data using a FEC scheme.

In some possible implementations, the processing unit is specifically configured to send a link codeword to the receiver device, where the link codeword includes an indication field, and the indication field indicates a host chip of the receiver device to perform data processing on received data using the FEC scheme.

In some possible implementations, the indication field is located in a base page and/or a next page in the link codeword.

In some possible implementations, the indication field is located in a FEC capacity field of the base page.

In some possible implementations, a rate at which the link codeword is transmitted is 106.25/X Gbps, where X is an integer greater than or equal to 1.

In some possible implementations, the processing unit is specifically configured to send a training frame to the receiver device, where the training frame includes an indication field, and the indication field indicates the host chip of the receiver device to perform data processing on the received data using the FEC scheme.

In some possible implementations, the indication field is located in a coefficient update field, a status report field, a control field, and/or a status field in the training frame.

In some possible implementations, a rate at which the training frame is transmitted is 106.25 Gbps or 103.125 Gbps.

In some possible implementations, the processing unit is further configured to receive auto-negotiation or link training initiated by the receiver device, where a type of a receiver optical module connected to the receiver host chip of the receiver device is a normal optical module, and the auto-negotiation or the link training initiated by the receiver device indicates the host chip to perform data processing on to-be-transmitted data using the FEC scheme.

According to a sixth aspect, this application provides a communication apparatus. The communication apparatus includes a transceiver unit, a processing unit, and a host chip. The transceiver unit is configured to receive auto-negotiation or link training initiated by a transmitter device. The processing unit is configured to determine, based on the auto-negotiation or link training, a FEC scheme used for performing data processing on received data by the host chip. The transceiver unit is configured to send a feedback message to a transmitter device, where the feedback message indicates the FEC scheme.

In some possible implementations, the transceiver unit is specifically configured to receive a first link codeword sent by the transmitter device, where the first link codeword includes a first indication field. The processing unit is specifically configured to determine the FEC scheme based on the first indication field.

In some possible implementations, the first indication field is located in a base page and/or a next page in the first link codeword.

In some possible implementations, the first indication field is located in a FEC capacity field of the base page in the first link codeword.

In some possible implementations, the transceiver unit is specifically configured to send a second link codeword to the transmitter device, where the second link codeword includes a second indication field, and the second indication field indicates a FEC scheme.

In some possible implementations, the second indication field is located in a base page and/or a next page in the second link codeword.

In some possible implementations, the second indication field is located in an ACK field of the base page in the second link codeword, and/or the second indication field is located in an ACK field of the next page in the second link codeword.

In some possible implementations, a rate at which the first link codeword is transmitted is 106.25/X Gbps, where X is an integer greater than or equal to 1.

In some possible implementations, the transceiver unit is specifically configured to receive a first training frame sent by the transmitter device, where the first training frame includes a third indication field. The processing unit is specifically configured to determine the FEC scheme based on the third indication field.

In some possible implementations, the third indication field is located in a coefficient update field, a status report field, a control field, and/or a status field in the first training frame.

In some possible implementations, the transceiver unit is specifically configured to send a second training frame to the transmitter device, where the second training frame includes a fourth indication field, and the fourth indication field indicates the FEC scheme.

In some possible implementations, a rate at which the first training frame is transmitted is 106.25 Gbps or 103.125 Gbps.

In some possible implementations, if a type of a transmitter optical module connected to a transmitter host chip in the transmitter device is an LPO module, an NPO module, or a CPO module, the FEC scheme is a first FEC scheme; and if the type of the transmitter optical module connected to the transmitter host chip in the transmitter device is a normal optical module, the FEC scheme is a second FEC scheme.

In some possible implementations, the processing unit is further configured to initiate auto-negotiation or link training to the transmitter device, to indicate a FEC scheme used for performing data processing on received data by the transmitter host chip of the transmitter device.

In some possible implementations, if the type of the optical module connected to the host chip is an LPO module, an NPO module, or a CPO module, the auto-negotiation or the link training initiated to the transmitter device indicates the transmitter host chip to perform data processing on the received data using the first FEC scheme; and if the type of the optical module connected to the host chip is a normal optical module, the auto-negotiation or the link training initiated to the transmitter device indicates the transmitter host chip to perform data processing on the received data using the second FEC scheme.

In some possible implementations, the first FEC scheme includes at least one of a multi-way codeword de-interleaving FEC scheme and a decoding method in which a first FEC code is used, and the second FEC scheme includes at least one of a FEC scheme without codeword de-interleaving and a decoding method in which a second FEC code is used.

According to a seventh aspect, this application provides a chip. The chip includes a processor, and the processor is configured to perform the method described in any implementation of the first aspect to the third aspect.

According to an eighth aspect, this application provides a host chip. The host chip includes a processor and an interface circuit. The interface circuit is configured to send and receive a signal. The processor is configured to perform the method described in any implementation of the first aspect to the third aspect.

According to a ninth aspect, this application provides a transmitter device. The transmitter device includes a processor and an interface circuit. The interface circuit is configured to send and receive a signal. The transmitter device is configured to perform the method described in any implementation of the first aspect and the second aspect.

According to a tenth aspect, this application provides a receiver device. The receiver device includes a processor and an interface circuit. The interface circuit is configured to send and receive a signal. The receiver device is configured to perform the method described in any implementation of the third aspect.

According to an eleventh aspect, this application provides a communication system. The communication system includes a receiver device and the transmitter device described in the ninth aspect.

According to a twelfth aspect, this application provides a communication system. The communication system includes a transmitter device and the receiver device described in the tenth aspect.

According to a thirteenth aspect, this application provides a computer-readable storage medium. The computer-readable storage medium stores instructions. When the instructions are executed by a computer, the method described in any implementation of the first aspect to the third aspect is implemented.

According to a fourteenth aspect, this application provides a computer program product. The computer program product includes program instructions. When the computer program product is executed, the method described in any implementation of the first aspect to the third aspect is implemented.

It can be learned from the foregoing technical solution that this application has the following advantages:

In this application, the host chip supports multiple FEC schemes for performing data processing on data, and specifically determines, based on the type of the optical module connected to the host chip, the FEC scheme for data processing. For example, if the type of the optical module is an LPO module, an NPO module, or a CPO module, the host chip performs data processing using the first FEC scheme. For another example, if the type of the optical module is a normal optical module, the host chip performs data processing using the second FEC scheme. In other words, in this application, the FEC scheme used by the host chip can be flexibly selected based on the type of the optical module, facilitating targeted configuration of a corresponding FEC scheme based on actual bit error performance of the optical module, thereby ensuring transmission efficiency and reliability in various scenarios without requiring additional hardware.

### BRIEF DESCRIPTION OF DRAWINGS

FIG. 1 is a diagram of a communication system to which an embodiment of this application is applied;
FIG. 2 is a diagram of a data transmission process according to an embodiment of this application;
FIG. 3 is a diagram of an implementation of transmitter data processing and receiver data processing according to an embodiment of this application;
FIG. 4(a) to FIG. 4(d) are diagrams of several possible communication scenarios between a transmitter device and a receiver device according to an embodiment of this application;
FIG. 5 is a schematic flowchart of a data processing method according to an embodiment of this application;
FIG. 6 is a schematic flowchart of performing auto-negotiation or link training between a transmitter device and a receiver device according to an embodiment of this application;
FIG. 7 is a diagram of a format of a link codeword according to an embodiment of this application;
FIG. 8(a) and FIG. 8(b) are diagrams of formats of a training frame according to an embodiment of this application;
FIG. 9 is a diagram of a multi-way codeword interleaving FEC scheme according to an embodiment of this application;
FIG. 10 is a diagram of a FEC scheme without codeword interleaving according to an embodiment of this application;
FIG. 11(a) and FIG. 11(b) are diagrams of a first application scenario in which a transmitter device and a receiver device perform data transmission according to an embodiment of this application;
FIG. 12 is a diagram of a second application scenario in which a transmitter device and a receiver device perform data transmission according to an embodiment of this application;
FIG. 13 is a diagram of a third application scenario in which a transmitter device and a receiver device perform data transmission according to an embodiment of this application;
FIG. 14 is a diagram of a structure of a communication apparatus according to an embodiment of this application;
FIG. 15 is a diagram of a structure of a host chip according to an embodiment of this application;
FIG. 16 is a diagram of a structure of a transmitter device according to an embodiment of this application; and
FIG. 17 is a diagram of a structure of a receiver device according to an embodiment of this application.

### DESCRIPTION OF EMBODIMENTS

Embodiments of this application provide a data processing method, an apparatus, and a system. A host module supports multiple FEC schemes for performing data processing on data, and can flexibly select, based on a type of an optical module, a FEC scheme used by the host module, facilitating targeted configuration of a corresponding FEC scheme based on actual bit error performance of the optical module, thereby ensuring data transmission efficiency and reliability in various scenarios.

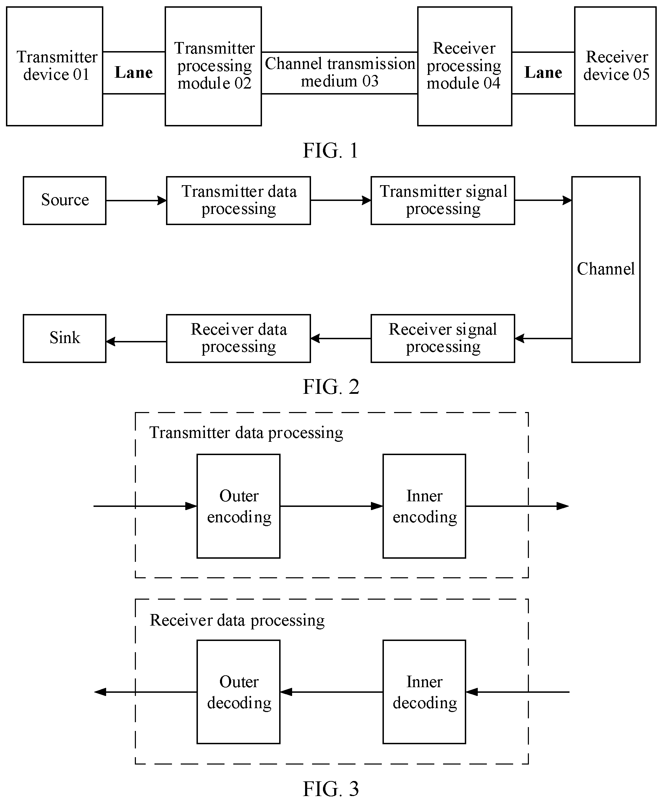

FIG. 1 is a diagram of a communication system to which an embodiment of this application is applied. As shown in FIG. 1, the communication system includes a transmitter device 01, a transmitter processing module 02, a channel transmission medium 03, a receiver processing module 04, and a receiver device 05. For example, the communication system is a data center network. The transmitter device 01 and the receiver device 05 may be devices such as switches or routers. The transmitter device 01 is also referred to as a host device (host device), a host chip (host chip), or a host module located at a transmitter side. The receiver device 05 is also referred to as a host device or a host chip located at a receiver side. The channel transmission medium 03 may be an optical fiber. The transmitter device 01 may be connected to the transmitter processing module 02 through an interface, and the receiver device 05 may be connected to the receiver processing module 04 through a lane. A type of the lane depends on types of the transmitter processing module 02 and the receiver processing module 04. The type of the lane includes but is not limited to an attachment unit interface (attachment unit interface, AUI) and a common electrical interface (common electrical interface or Common Electrical I/O, CEI). The transmitter processing module 02 and the receiver processing module 04 may be optical modules (optical module), electrical modules, connectors (connector), or other modules that processes data during data transmission. For example, the processing module may be an 800LR module (800LR module), which is a coherent optical module. In addition, the transmitter device 01, the transmitter processing module 02, the channel transmission medium 03, the receiver processing module 04, and the receiver device 05 in the communication system may all support bidirectional transmission or unidirectional transmission. This is not specifically limited herein.

For example, the transmitter processing module 02 and the receiver processing module 04 are optical modules. Types of the optical modules include but are not limited to a normal optical module (normal module), a linear pluggable optical (linear pluggable optics or linear-drive pluggable optics, LPO) module, a near package optical (near package optics, NPO) module, and a co-packaged optics (co-packaged optics, CPO) module. In embodiments of this application, the LPO module, the NPO module, and the CPO module may also be referred to as an LPO optical module, an NPO optical module, and a CPO optical module. In embodiments of this application, an optical module that does not belong to the LPO module, the NPO module, and the CPO module is referred to as a normal optical module. Functions that can be implemented by the normal optical module include but are not limited to digital signal processing (digital signal processor, DSP), clock data recovery (clock data recovery, CDR), and the like. For example, the normal optical module converts an analog signal into a digital signal, performs DSP on the digital signal, and then converts the digital signal into an analog signal and sends the analog signal to a host chip. Because retiming is required for performing DSP, the normal optical module may also be referred to as a retimed module (retimed module). In embodiments of this application, the host chip may also be referred to as a switching chip. The LPO module, the NPO module, and the CPO module do not have functions such as DSP and CDR, and the functions such as DSP and CDR need to be implemented by using the host chip. In other words, the normal optical module can process both analog signals and digital signals, while the LPO module, NPO module, and CPO module process only analog signals and do not process digital signals. The normal optical module is connected to the host chip through the AUI, and the LPO module can be connected to the host chip through the CEI. Different from the LPO module, the NPO module and the CPO module do not have a pluggable optical module entity in an encapsulation form, and are closer to the host chip. The NPO module and the CPO module may also be referred to as an optical engine (optical engine). An NPO technology or a CPO technology is a technology for encapsulating the host chip and the optical engine. When the NPO technology is used to encapsulate the host chip and the optical engine, the optical engine may be referred to as an NPO module. When the CPO technology is used to encapsulate the host chip and the optical engine, the optical engine may be referred to as a CPO module. However, in the LPO technology, the host chip and the optical engine are not encapsulated together, and the optical module is pluggable.

FIG. 2 is a diagram of a data transmission process according to an embodiment of this application. As shown in FIG. 2, at a transmitter side, a source provides a to-be-transmitted data stream. A transmitter data processor receives the data stream, performs data processing including encoding, interleaving, and modulation on the data stream to obtain a symbol data stream, sends the symbol data stream to a transmitter signal processor to form an optical signal, and transmits the signal to a receiver device through a channel. After receiving a distorted signal caused by noise or other impairments in the channel, the receiver device sends the signal to a receiver signal processor for dispersion compensation, synchronization, phase recovery, and other operations. Then, the signal is sent for receiver data processing for performing processing including demodulation, de-interleaving, and decoding to recover original data, and the data is sent to a sink. In an example, if the transmitter processing module 02 and the receiver processing module 04 in FIG. 1 are normal optical modules, transmitter data processing and transmitter signal processing shown in FIG. 2 may be applied to the transmitter processing module 02 shown in FIG. 1, and receiver data processing and receiver signal processing shown in FIG. 2 may be applied to the receiver processing module 04 shown in FIG. 1. In another example, if the transmitter processing module 02 in FIG. 1 is an LPO module, an NPO module, or a CPO module, the transmitter data processing shown in FIG. 2 may be applied to the transmitter device 01 shown in FIG. 1, the transmitter signal processing shown in FIG. 2 may be applied to the transmitter processing module 02 shown in FIG. 1, the receiver signal processing shown in FIG. 2 may be applied to the receiver processing module 04 shown in FIG. 1, and the receiver data processing shown in FIG. 2 may be applied to the receiver device 05 shown in FIG. 1.

FIG. 3 is a diagram of an implementation of transmitter data processing and receiver data processing according to an embodiment of this application. As shown in FIG. 3, this may be applied to concatenated coding scenarios. In transmitter data processing, operations such as outer coding and inner coding are sequentially performed on an input data stream. In receiver data processing, operations such as inner decoding and outer decoding are sequentially performed on an input data stream. It should be understood that, in actual application, the operations performed in the transmitter data processing include but are not limited to the operations shown in FIG. 3. For example, before the inner coding, padding bits and scrambling may be inserted into an encoded data frame obtained through outer coding; and corresponding inverse operations are performed during the receiver data processing. For another example, after inner coding, symbol mapping and polarization distribution may be further performed on data streams, and corresponding inverse operations may be performed during the receiver data processing.

In a possible concatenated coding scenario, the transmitter processing module 02 and the receiver processing module 04 use normal optical modules. As shown in FIG. 1, in a process of transmitting data from the transmitter device 01 to the receiver device 05, the transmitter device 01 is configured to perform outer encoding on the data, and then transmit outer-encoded data to the transmitter processing module 02. The transmitter processing module 02 is configured to: perform inner encoding on the outer-encoded data, to obtain data that has undergone outer encoding and inner encoding; and send the data that has undergone outer encoding and inner encoding to the channel transmission medium 03. The channel transmission medium 03 is configured to transmit the data that has undergone outer encoding and inner encoding to the receiver processing module 04. The receiver processing module 04 is configured to: perform inner decoding on the data that has undergone outer encoding and inner encoding, and send inner-decoded data to the receiver device 05. The receiver device 05 is configured to perform outer decoding on the inner-decoded data.

In another possible cascaded coding scenario, the transmitter processing module 02 uses an LPO module, an NPO module, or a CPO module. As shown in FIG. 1, in a process of transmitting data from the transmitter device 01 to the receiver device 05, the transmitter device 01 is configured to perform outer encoding and inner encoding on the data, to obtain data that has undergone outer encoding and inner encoding, and then transmit the data to the channel transmission medium 03 via the transmitter processing module 02. The channel transmission medium 03 is configured to transmit the data that has undergone outer encoding and inner encoding to the receiver processing module 04, and transmit the data to the receiver device 05 via the receiver processing module 04. The receiver device 05 is configured to sequentially perform inner decoding and outer decoding on the data that has undergone outer encoding and inner encoding.

It should be understood that "inner" and "outer" are distinguished only based on a distance between the channel transmission medium 03 and an entity that performs an operation on data. An entity that performs an inner operation is closer to the channel transmission medium, and an entity that performs an outer operation is farther away from the channel transmission medium. In embodiments of this application, the data is sent to the channel transmission medium 03 via the transmitter processing module 02 after being sent from the transmitter device 01, and then is sent from the channel transmission medium 03 to the receiver device 05 via the receiver processing module 04. Data encoded by the transmitter device 01 is farther away from the channel transmission medium 03 than data encoded by the transmitter processing module 02, and data decoded by the receiver device 05 is farther away from the channel transmission medium 03 than data decoded by the receiver processing module 04. For example, the data encoded by the transmitter device 01 is referred to as outer-encoded data, the data encoded by the transmitter processing module 02 is referred to as inner-encoded data, the data decoded by the receiver device 05 is referred to as outer-decoded data, and the data decoded by the receiver processing module 04 is referred to as inner-decoded data. In a possible implementation, both the inner encoding and/or the outer encoding are performed using a forward error correction (forward error correction, FEC) coding scheme, to form a concatenated FEC transmission solution. For example, Reed-Solomon (Reed-Solomon, RS) codes may be used for outer encoding, and Hamming (Hamming) codes may be used for inner encoding. For another example, RS codes may be used for outer encoding, and Bose-Chaudhuri-Hocquenghem (Bose-Chaudhuri-Hocquenghem, BCH) codes may be used for inner encoding. For another example, RS codes may be used for outer encoding, and polar (Polar) codes may be used for inner encoding. For another example, low-density parity-check (low density parity check, LDPC) codes may be used for outer encoding and inner encoding.

It should be noted that the foregoing content is example description of application scenarios of the data processing method provided in embodiments of this application, and does not constitute any limitation on the application scenarios of the data processing method. A person of ordinary skill in the art may learn that, as service requirements change, the application scenarios of the data processing method may be adjusted based on application requirements. Application scenarios are not listed one by one in embodiments of this application.

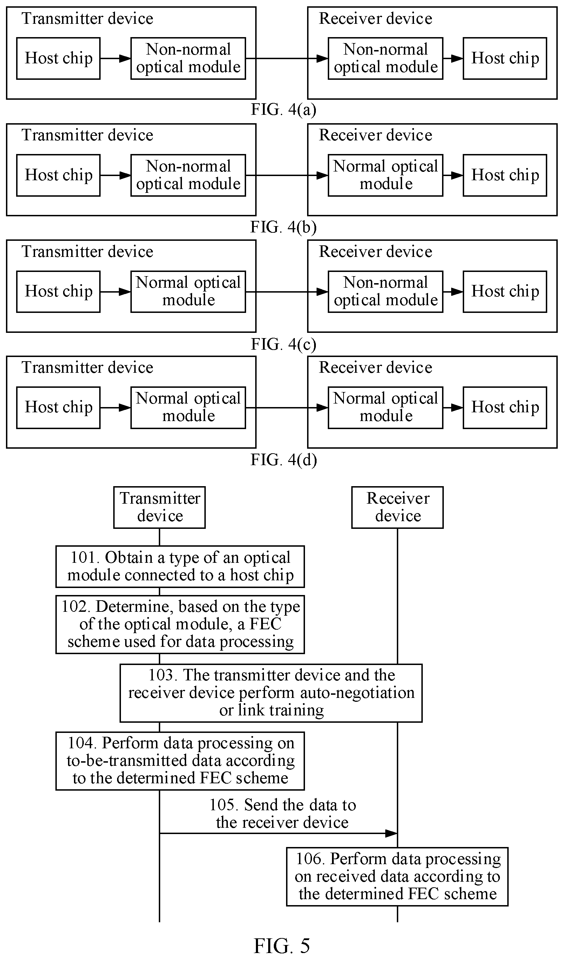

FIG. 4(a) to FIG. 4(d) are diagrams of several possible communication scenarios between a transmitter device and a receiver device according to an embodiment of this application. As shown in an example of FIG. 4(a), the transmitter device includes a host chip and a non-normal optical module, and the receiver device includes a host chip and a non-normal optical module. As shown in an example of FIG. 4(b), the transmitter device includes a host chip and a non-normal optical module, and the receiver device includes a host chip and a normal optical module. As shown in an example of FIG. 4(c), the transmitter device includes a host chip and a normal optical module, and the receiver device includes a host chip and a non-normal optical module. As shown in an example of FIG. 4(d), the transmitter device includes a host chip and a normal optical module, and the receiver device includes a host chip and a normal optical module. The non-normal optical modules shown in the examples of FIG. 4(a) to FIG. 4(d) include but are not limited to an LPO module, an NPO module, and a CPO module.

It should be understood that the transmitter device and the receiver device in embodiments of this application are named based on data flow directions, and functions of the devices are not limited. For example, the transmitter device may also have a receiving function, and the receiver device may also have a sending function. Specific types of the transmitter device and the receiver device are not limited in this application. For example, the transmitter device and the receiver device may be routers, switches, or computers. The following describes the data processing method provided in embodiments of this application.

FIG. 5 is a schematic flowchart of a data processing method according to an embodiment of this application. As shown in FIG. 5, the method includes the following steps.

101. A transmitter device obtains a type of an optical module.

Specifically, the transmitter device includes a host chip and an optical module. The host chip is connected to the optical module, and the optical module includes but is not limited to a normal optical module, an LPO module, an NPO module, and a CPO module. The host chip needs to first obtain the type of the connected optical module, and then use a corresponding data processing scheme based on the type of the optical module. Optionally, in this embodiment of this application, obtaining the type of the optical module includes: obtaining a connection manner or a distance between the host chip and the optical module. In a possible scenario, the optical module is connected to the host chip in a pluggable manner. For example, the optical module may be a normal optical module or an LPO module. A control unit is disposed on a circuit board on which the host chip is located. After the normal optical module or the LPO module is connected to the host chip, the control unit can detect the type of the optical module, and feed back the type of the optical module to the host chip. In another possible scenario, the optical module and the host chip are packaged together. In this scenario, the host chip and the optical module may still be considered to have a connection relationship. When the host chip and an optical engine are packaged by using an NPO technology, it may be considered that the type of the optical module is an NPO optical module. When the host chip and the optical engine are packaged by using a CPO technology, it may be considered that the type of the optical module is a CPO optical module. The type of the optical module may be pre-stored in a register of the transmitter device, and the host chip can read the type of the optical module from the register.

It should be noted that, in addition to being classified as a normal optical module, an LPO module, an NPO module, or a CPO module, the optical module can further be classified based on transmission rates, transmission distances, and the like. For example, optical modules may be classified into 100G optical modules, 400G optical modules, and other modules based on transmission rates. Embodiments of this application are generally applied to a scenario of a 100G optical module, and the 100G optical module has a data transmission rate of 100 gigabits per second (gigabits per second, Gbps). For another example, optical modules may be classified into SR (short range) modules, LR (long range) modules, ER (extended range) modules, and other modules based on transmission distances.

102. The transmitter device determines, based on the type of the optical module, a FEC scheme used for data processing.

In this embodiment of this application, the host chip needs to perform FEC processing, for example, FEC encoding, on to-be-transmitted data. Based on different types of optical modules, the host chip uses different FEC schemes. In a possible scenario, the host chip is connected to an LPO module, an NPO module, or a CPO module, and the host chip selects a first FEC scheme. In another possible scenario, the host chip is connected to a normal optical module, and the host chip selects a second FEC scheme. A difference between the first FEC scheme and the second FEC scheme includes but is not limited to a FEC interleaving depth and/or a FEC coding type. It should be understood that the host chip supports both the first FEC scheme and the second FEC scheme in terms of hardware, and the host chip may flexibly select a FEC scheme based on the type of the optical module. That is, when conditions such as a transmission rate and a transmission distance remain unchanged, the optical module connected to the host chip is changed from a normal optical module to an LPO module, an NPO module, or a CPO module, and the host chip can change the FEC scheme, so that data transmission efficiency and reliability can be ensured in various scenarios, and no additional hardware is required for implementation.

It should be noted that the host chip may specifically determine, by reading information from the register, a FEC scheme to be used. For example, the first FEC scheme and the second FEC scheme correspond to different values in the register. In this embodiment of this application, based on determining the type of the optical module connected to the host chip, the transmitter device and a receiver device may configure the value in the register through auto-negotiation or link training, and then the host chip selects the FEC scheme based on the value in the register. In addition, in some possible scenarios, the value in the register may alternatively be manually configured based on the type of the optical module connected to the host chip, and then the host chip selects the FEC scheme based on the value in the register.

103. The transmitter device performs auto-negotiation or link training with the receiver device.

After determining the FEC scheme used by the host chip, the transmitter device initiates auto-negotiation or link training to the receiver device, so as to notify the receiver device of the FEC scheme used by the host chip at the local end (namely, the transmitter device). The receiver device performs data processing on the received data using the same FEC scheme as the transmitter device. In some possible implementations, the transmitter device may also initiate auto-negotiation or link training to the receiver device, so as to notify the receiver device of the type of the optical module connected to the host chip at the local end (namely, the transmitter device). It should be noted that, based on types of optical modules used by the transmitter device and the receiver device, there are multiple implementation scenarios in which the transmitter device and the receiver device perform auto-negotiation or link training.

Scenario 1: For example, in FIG. 4(a), both the transmitter device and the receiver device use a non-normal optical module, and auto-negotiation or link training is performed between the host chip of the transmitter device and the host chip of the receiver device.

Scenario 2: For example, in FIG. 4(b), the transmitter device uses a non-normal optical module, and the receiver device uses a normal optical module. Auto-negotiation or link training is performed between the host chip of the transmitter device and the normal optical module of the receiver device. After the auto-negotiation or the link training is completed, the normal optical module of the receiver device feeds back the determined information to the host chip.

Scenario 3: For example, in FIG. 4(c), the transmitter device uses a normal optical module, and the receiver device uses a non-normal optical module. Auto-negotiation or link training is performed between the normal optical module of the transmitter device and the host chip of the receiver device. After the auto-negotiation or the link training is completed, the normal optical module of the transmitter device feeds back the determined information to the host chip.

Scenario 4: For example, in FIG. 4(d), both the transmitter device and the receiver device use a normal optical module. Auto-negotiation or link training is performed between the normal optical module of the transmitter device and the normal optical module of the receiver device. After the auto-negotiation or the link training is completed, the normal optical module of the transmitter device feeds back determined information to the host chip, and the normal optical module of the receiver device feeds back the determined information to the host chip.

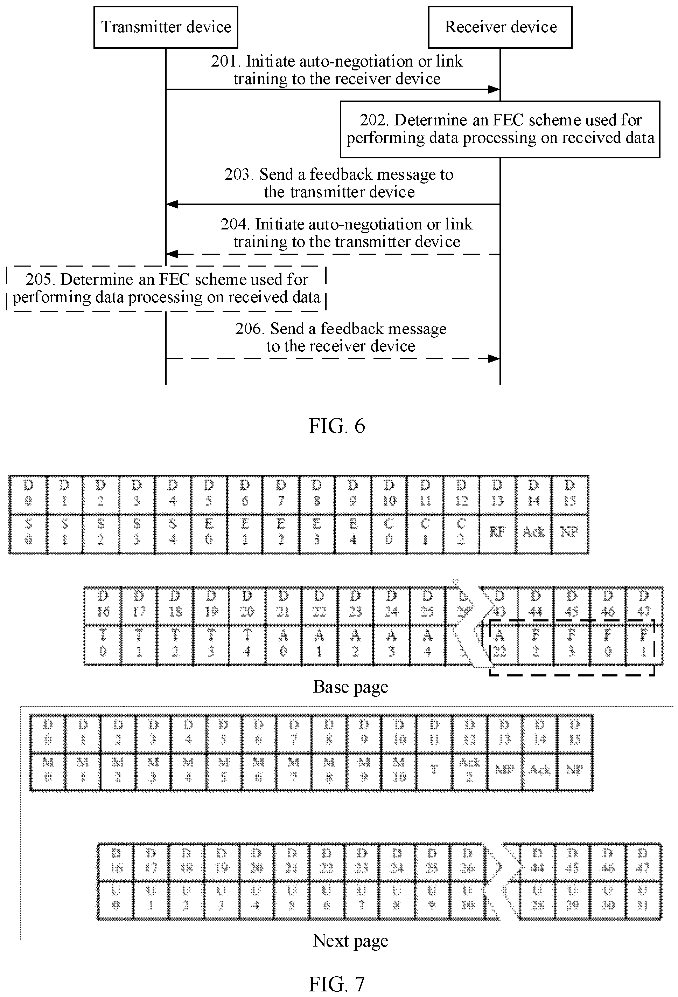

FIG. 6 is a schematic flowchart of performing auto-negotiation or link training between the transmitter device and the receiver device according to an embodiment of this application. As shown in FIG. 6, the process includes the following steps.

201. The transmitter device initiates auto-negotiation or link training to the receiver device.

On the premise that the transmitter device determines the FEC scheme used by the host chip, the purpose of initiating auto-negotiation or link training to the receiver device by the transmitter device is to enable the receiver device to also use the same FEC scheme to perform data processing on received data. It should be understood that, in a direction in which the transmitter device sends data to the receiver device, although the transmitter device and the receiver device use a same FEC scheme to perform data processing, the data processing performed by the transmitter device is considered as an inverse operation of the data processing performed by the receiver device. For example, the transmitter device interleaves FEC codewords based on an interleaving depth, and the receiver device de-interleaves the FEC codewords based on the same interleaving depth. For another example, the transmitter device performs FEC encoding on to-be-transmitted data by using a code, and the receiver device performs FEC decoding on received data by using the same code.

In a possible implementation, the transmitter device specifically initiates auto-negotiation by sending one or more link codewords (link codeword) to the receiver device. For example, a rate at which the link codeword is transmitted is 106.25/X Gbps, where X is an integer greater than or equal to 1. The link codeword includes an indication field, and the indication field indicates that the host chip of the receiver device performs data processing on received data in a same FEC scheme as that of the transmitter device.

FIG. 7 is a diagram of a format of a link codeword according to an embodiment of this application. As shown in FIG. 7, the link codeword includes a base page (Base Page) and a next page (Next Page), and the indication field may be located in the base page and/or the next page. Optionally, the indication field may be specifically located in a FEC capacity (capacity) field of the base page shown in a dashed box in FIG. 7. For example, if the indication field is located in D43 of the FEC capacity field, A22 may be modified to F4.

In another possible implementation, the transmitter device specifically initiates link training by sending a training frame (training frame) to the receiver device. For example, a rate at which the training frame is transmitted is 106.25 Gbps or 103.125 Gbps. The training frame includes an indication field, and the indication field indicates the host chip of the receiver device to perform data processing on received data using a same FEC scheme as that of the transmitter device.

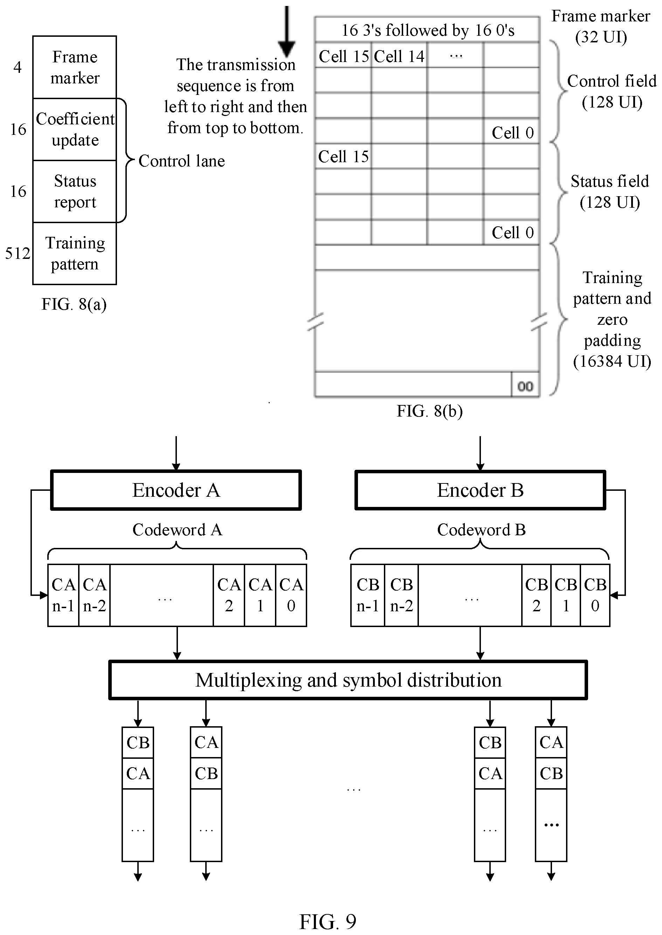

FIG. 8 is a diagram of a format of a training frame according to an embodiment of this application. FIG. 8(a) and FIG. 8(b) illustrate two possible training frame formats. For example, the training frame shown in FIG. 8(a) may be used in a scenario in which a rate is less than 100 Gbps, and the training frame shown in FIG. 8(b) may be used in a scenario in which a rate is greater than or equal to 100 Gbps. For example, in FIG. 8(a), the training frame includes a frame marker (frame marker) field, a coefficient update (coefficient update) field, a status report (Status report) field, and a training pattern (training pattern) field. The indication field may be located in the coefficient update field and/or the status report field. For example, in FIG. 8(b), the indication field may be located in a control field (control field) and/or a status field (status field).

202. The receiver device determines a FEC scheme used for performing data processing on received data.

In a possible scenario, as shown in the examples of FIG. 4(a) and FIG. 4(b), the host chip in the transmitter device is connected to a non-normal optical module, for example, an LPO module, an NPO module, or a CPO module, and the host chip in the transmitter device selects the first FEC scheme to perform data processing on to-be-transmitted data. Based on the auto-negotiation or the link training initiated by the transmitter device to the receiver device, regardless of the type of the optical module connected to the host chip in the receiver device, provided that the host chip in the receiver device supports the first FEC scheme, the receiver device performs data processing on the received data using the first FEC scheme.

In another possible scenario, as shown in the examples of FIG. 4 (c) and FIG. 4(d), the host chip in the transmitter device is connected to a normal optical module, and the host chip in the transmitter device selects the second FEC scheme to perform data processing on to-be-transmitted data. Based on the auto-negotiation or the link training initiated by the transmitter device to the receiver device, regardless of the type of the optical module connected to the host chip in the receiver device, provided that the host chip in the receiver device supports the second FEC scheme, the receiver device performs data processing on received data using the second FEC scheme.

203. The receiver device sends a feedback message to the transmitter device.

The receiver device sends the feedback message to the transmitter device to indicate that the negotiation succeeds or fails. For example, the feedback message indicates a FEC scheme selected by the receiver device, and the FEC scheme selected by the receiver device being the same as a FEC scheme selected by the transmitter device indicates that the negotiation succeeds; or the feedback message indicates that the receiver device can select a FEC scheme the same as that of the transmitter device, and it indicates that the negotiation succeeds. For another example, the feedback message indicates a FEC scheme selected by the receiver device, and the FEC scheme selected by the receiver device being different from the FEC scheme selected by the transmitter device indicates that the negotiation fails; or the feedback message indicates that the receiver device cannot select the same FEC scheme as the transmitter device, and it indicates that the negotiation fails.

In a possible implementation, if the transmitter device initiates auto-negotiation by sending a link codeword to the receiver device, the feedback message sent by the receiver device to the transmitter device is in a format of a link codeword. For example, the feedback message may specifically use an acknowledgment (ACK) field in a base page of the link codeword to indicate information. In another possible implementation, if the transmitter device specifically initiates link training by sending a training frame to the receiver device, the feedback message sent by the receiver device to the transmitter device is in a format of a training frame.

It should be understood that step 201 to step 203 are a process of auto-negotiation or link training actively initiated by the transmitter device. Step 204 to step 206 are a process of auto-negotiation or link training actively initiated by the receiver device. A specific implementation is similar to that of step 201 to step 203, and details are not described herein.

It should be noted that, a device that actively initiates auto-negotiation or link training usually selects, based on a type of an optical module connected to a host chip at the local end, a FEC scheme for performing data processing on to-be-transmitted data. However, in actual application, this selection manner is not absolute. For example, the first FEC scheme has better performance than the second FEC scheme. If the local device uses a non-normal optical module such as an LPO module, an NPO module, or a CPO module, the local device naturally uses the corresponding first FEC scheme to perform data processing on to-be-transmitted data. Although the peer device uses a normal optical module, the peer device learns, through auto-negotiation or link training, that the local device selects the first FEC scheme to perform data processing on the to-be-transmitted data, and the peer device may also select the first FEC scheme with better performance to perform data processing on the to-be-transmitted data. In the foregoing example of FIG. 4(b), the receiver device uses a normal optical module. In a normal case, the receiver device selects the corresponding second FEC scheme to perform data processing on to-be-transmitted data. However, in a process of performing auto-negotiation or link training with the transmitter device, the receiver device learns that the transmitter device selects the first FEC scheme to perform data processing on the to-be-transmitted data. In this case, the receiver device may also select, based on a capability of the receiver device, the first FEC scheme with better performance to perform data processing on the to-be-transmitted data. In the foregoing example of FIG. 4(c), the transmitter device uses a normal optical module. In a normal case, the transmitter device selects the corresponding second FEC scheme to perform data processing on to-be-transmitted data. However, in a process of performing auto-negotiation or link training with the receiver device, the transmitter device learns that the receiver device selects the first FEC scheme to perform data processing on to-be-transmitted data. In this case, the transmitter device may also select, based on a capability of the transmitter device, the first FEC scheme with better performance to perform data processing on the to-be-transmitted data. In other words, on the premise that the host chips of both the transmitter device and the receiver device support the first FEC scheme with better performance, provided that at least one of the transmitter device and the receiver device uses a non-normal optical module such as an LPO module, an NPO module, or a CPO module, the host chips of both the transmitter device and the receiver device may use the first FEC scheme with better performance to perform data processing on to-be-transmitted data.

104. The transmitter device performs data processing on the to-be-transmitted data according to the determined FEC scheme.

In a first possible scenario, in the foregoing examples FIG. 4(a) and FIG. 4(b), the transmitter device uses a non-normal optical module, for example, an LPO module, an NPO module, or a CPO module. The host chip of the transmitter device selects the first FEC scheme to perform data processing on the to-be-transmitted data. The first FEC scheme includes but is not limited to a FEC interleaving depth and/or a FEC coding type.

In an example, the host chip performs data processing on the to-be-transmitted data by using a multi-way codeword interleaving FEC scheme. FIG. 9 is a diagram of a multi-way codeword interleaving FEC scheme according to an embodiment of this application. As shown in FIG. 9, there are two to-be-transmitted data streams. One data stream is encoded by using encoder A to obtain a codeword A, and the other data stream is encoded by using encoder B to obtain a codeword B. Both the codeword A and the codeword B include multiple symbols. RS codes are used as an example, and one symbol includes 10 bits. Further, multiplexing and symbol distribution are performed on the codeword A and the codeword B to obtain multiple data streams. Each data stream includes symbols (represented by CA in FIG. 9) from the codeword A and symbols (represented by CB in FIG. 9) from the codeword B. Therefore, the manner shown in FIG. 9 may be understood as a 2-way codeword interleaving FEC scheme. In addition, in embodiments of this application, a 4-way codeword interleaving FEC scheme, an 8-way codeword interleaving FEC scheme, or other FEC schemes may also be used.

In another example, the host chip performs FEC encoding on the to-be-transmitted data by using the first FEC code, and specifically, may perform encoding by using RS codes. For example, the first FEC code may be RS (544,514), RS (528,514), or the like. RS (544,514) indicates that a length of an encoded codeword is 544 symbols, and RS (528,514) indicates that a length of an encoded codeword is 528 symbols, where one symbol includes 10 bits.

In a second possible scenario, in the foregoing examples FIG. 4 (c) and FIG. 4(d), the host chip in the transmitter device is connected to a normal optical module, and the host chip in the transmitter device selects the second FEC scheme to perform data processing on the to-be-transmitted data. The second FEC scheme includes but is not limited to a FEC interleaving depth and/or a FEC coding type.

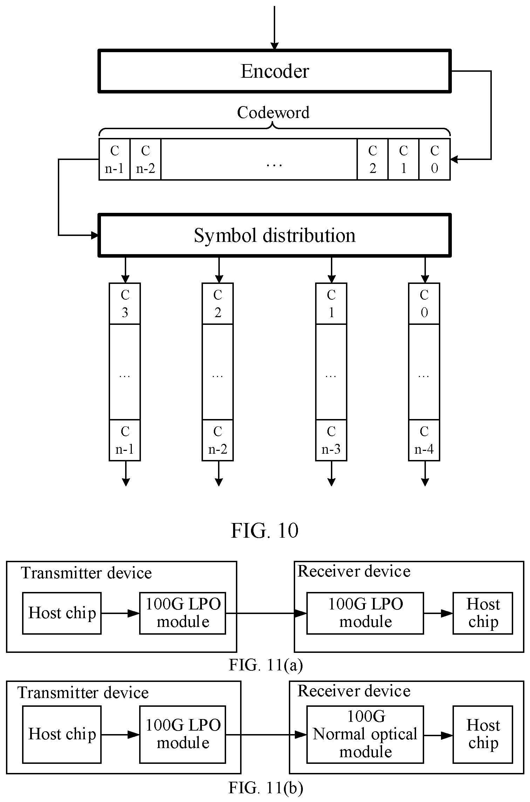

In an example, the host chip performs data processing on the to-be-transmitted data in a FEC scheme without codeword interleaving. FIG. 10 is a diagram of a FEC scheme without codeword interleaving according to an embodiment of this application. Different from the multi-way codeword interleaving FEC scheme shown in FIG. 9, as shown in FIG. 10, codewords (codeword) are obtained by performing FEC encoding on the to-be-transmitted data by using an encoder. The codewords include multiple symbols (represented by C0, C1, ..., and Cn-1 in FIG. 10). RS codes are used as an example, and one symbol includes 10 bits. Further, symbol distribution is performed on the codewords to obtain multiple data streams. Symbols in each data stream are from a same codeword, and no codeword interleaving exists. Therefore, the manner shown in FIG. 10 may be understood as a FEC scheme without codeword interleaving.

In another example, the host chip performs FEC encoding on the to-be-transmitted data using the second FEC code, and specifically, may perform encoding by using RS codes. For example, the second FEC code may be RS (544,514), RS (528,514), or the like. It should be understood that, in actual application, the first FEC code is different from the second FEC code. For example, if the first FEC code is RS (544,514), the second FEC code may be RS (528,514). For another example, if the first FEC code is RS (528,514), the second FEC code may be RS (544,514).

105. The transmitter device sends the data to the receiver device.

Specifically, the host chip of the transmitter device performs data processing on the to-be-transmitted data according to the determined FEC scheme, and sends processed data to the optical module. The optical module generates an optical signal based on the received data, and sends the optical signal to the receiver device through an optical fiber channel. In an example, the host chip of the transmitter device is connected to a non-normal optical module, for example, an LPO module, an NPO module, or a CPO module. In addition to performing outer encoding according to the first FEC scheme, data processing performed by the host chip further includes operations such as inner encoding. In another example, the host chip of the transmitter device is connected to a normal optical module. Data processing performed by the host chip includes outer encoding performed according to the second FEC scheme, inner encoding performed by the normal optical module on outer-encoded data, and other operations.

106. The receiver device performs data processing on the received data according to the determined FEC scheme.

Specifically, the optical module of the receiver device receives the optical signal from the transmitter device through the optical fiber channel, performs processing such as optical-to-electrical conversion on the optical signal to obtain data, and then sends the data to the host chip of the receiver device. The host chip of the receiver device performs data processing on the received data according to the determined FEC scheme. In an example, the host chip of the transmitter device is connected to a non-normal optical module, for example, an LPO module, an NPO module, or a CPO module. The data processing performed by the host chip of the receiver device includes operations such as outer decoding and inner decoding performed according to the first FEC scheme, and the operations may be performed by the optical module or the host chip of the receiver device. In another example, the host chip of the transmitter device is connected to a normal optical module. The data processing performed by the host chip of the receiver device includes operations such as outer decoding and inner decoding performed by the optical module or the host chip of the receiver device according to the second FEC scheme.

The following provides several specific application scenarios in which the transmitter device and the receiver device perform data transmission.

FIG. 11(a) and FIG. 11(b) are diagrams of a first application scenario in which the transmitter device and the receiver device perform data transmission according to an embodiment of this application. FIG. 11(a) and FIG. 11(b) show non-breakout scenarios, that is, the host chip of the transmitter device sends a data stream to the optical module via one lane. It should be understood that, in addition to the lane in a sending direction, there is another lane in a receiving direction between the host chip and the optical module. The accompanying drawings show merely the lane and the data stream transmission in the sending direction.

In a direction in which the transmitter device sends data to the receiver device, as shown in the examples of FIG. 11(a) and FIG. 11(b), the host chip of the transmitter device is connected to a 100G LPO module, a rate at which the host chip sends data to the 100G LPO module is 100 Gbps, and the host chip performs FEC encoding on data by using RS (544,514), and performs data processing using a 2-way codeword interleaving FEC scheme. This manner may be briefly referred to as 2×RS (544,514). Correspondingly, the host chip of the receiver device performs data processing on the received data using the 2×RS (544,514) scheme. The data processing performed by the host chip of the receiver device may be considered as an inverse operation of the data processing performed by the host chip of the transmitter device.

In a direction in which the receiver device sends data to the transmitter device, as shown in the example of FIG. 11(a), the host chip of the receiver device is connected to a 100G LPO module, and the host chip performs data processing on to-be-transmitted data using a 2×RS (544,514) scheme. Correspondingly, the host chip of the transmitter device performs data processing on the received data using the 2×RS (544,514) scheme. In other words, this case is a symmetric scenario in which codeword interleaving depths in the two data transmission directions are the same.

In a direction in which the receiver device sends data to the transmitter device, as shown in the example of FIG. 11(b), the host chip of the receiver device is connected to a 100G normal optical module, and the host chip performs FEC encoding on data using an RS (544,514) scheme, and performs data processing using a FEC scheme without codeword interleaving. This manner may be briefly referred to as 1×RS (544,514). Correspondingly, the host chip of the transmitter device performs data processing on received data using the 1×RS (544,514) scheme. In other words, this case is an asymmetric scenario in which codeword interleaving depths in the two data transmission directions are different.

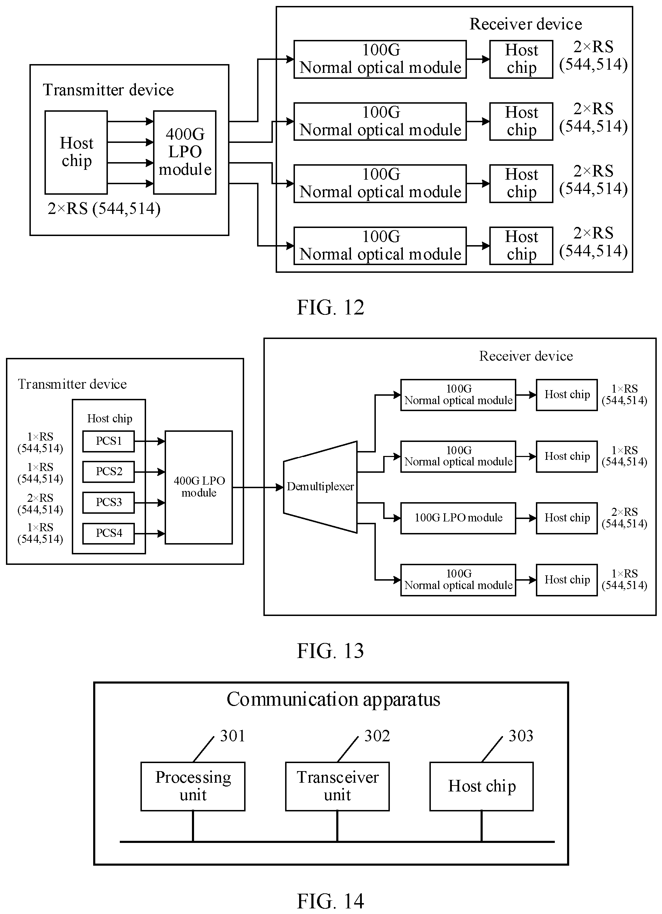

FIG. 12 is a diagram of a second application scenario in which the transmitter device and the receiver device perform data transmission according to an embodiment of this application. FIG. 12 shows a breakout scenario. To be specific, the host chip of the transmitter device sends multiple data streams to the optical module via multiple lanes, and the multiple data streams share one optical module. FIG. 12 is used as an example. A bandwidth of 400GE is optically split into four independent 100GE signals. The host chip of the transmitter device is connected to a 400G LPO module. The host chip respectively sends four data streams to the 400G LPO module via four lanes, where a transmission rate of each data stream is 100 Gbps, and a total transmission rate is 400 Gbps.

In a direction in which the transmitter device sends data to the receiver device, the host chip of the transmitter device performs FEC encoding on data using an RS (544,514) scheme, and performs data processing using a 2-way interleaving FEC scheme. This manner may be briefly referred to as 2×RS (544,514). The host chip of the transmitter device performs data processing on the four streams of to-be-transmitted data using the 2×RS (544,514) scheme. The 400G LPO module of the transmitter device is connected to four normal optical modules of the receiver device via four optical fibers, and each normal optical module of the receiver device is connected to a corresponding host chip. Each host chip of the receiver device performs data processing on received data using the 2×RS (544,514) scheme. The data processing performed by the host chip of the receiver device may be considered as an inverse operation of the data processing performed by the host chip of the transmitter device.

In a direction in which the receiver device sends data to the transmitter device, in an example, each host chip of the receiver device performs data processing on to-be-transmitted data using a 2×RS (544,514) scheme. Correspondingly, the host chip of the transmitter device performs data processing on received data using the 2×RS (544,514) scheme. In another example, each host chip of the receiver device performs data processing on to-be-transmitted data using a 1×RS (544,514) scheme. Correspondingly, the host chip of the transmitter device performs data processing on received data using the 1×RS (544,514) scheme.

FIG. 13 is a diagram of a third application scenario in which the transmitter device and the receiver device perform data transmission according to an embodiment of this application. FIG. 13 shows another breakout scenario. Different from the scenario shown in FIG. 12, in the scenario shown in FIG. 13, the host chip of the transmitter device may perform data processing on different to-be-transmitted data streams using different FEC schemes. For example, the host chip of the transmitter device is connected to a 400G LPO module, and four physical coding sublayers (Physical Coding Sublayer, PCS) in the host chip of the transmitter device respectively perform data processing on four to-be-transmitted data streams. A data processing scheme used by PCS3 is different from that used by the other PCSs.

In a direction in which the transmitter device sends data to the receiver device, PCS1, PCS2, and PCS4 all perform data processing on to-be-transmitted data using a 1×RS (544,514) scheme, and PCS3 performs data processing on to-be-transmitted data using a 2×RS (544,514) scheme. The 400G LPO module may transmit, in a wavelength multiplexing mode, the four data streams from the host chip to the receiver device via one optical fiber. A demultiplexer of the receiver device performs wavelength demultiplexing on signals from the optical fiber, and respectively transmits four wavelength-demultiplexed signals to four optical modules of the receiver device. Three of the optical modules of the receiver device are 100G normal optical modules, configured to receive data from PCS1, PCS2, and PCS4 respectively. The other optical module of the receiver device is a 100G LPO module, configured to receive data from PCS3. Correspondingly, three host chips that are respectively connected to the three 100G normal optical modules in the receiver device perform data processing on received data using the 1×RS (544,514) scheme, and a host chip that is connected to the 100G LPO module in the receiver device performs data processing on received data using the 2×RS (544,514) scheme.

In a direction in which the receiver device sends data to the transmitter device, the host chip that is connected to the 100G LPO module in the receiver device performs data processing on to-be-transmitted data using the 2×RS (544,514) scheme. Correspondingly, PCS3 in the host chip of the transmitter device performs data processing on received data using the 2×RS (544,514) scheme. Three host chips that are respectively connected to the three 100G normal optical modules in the receiver device perform data processing on to-be-transmitted data using the 1×RS (544,514) scheme. Correspondingly, PCS1, PCS2, and PCS4 in the host chip of the transmitter device perform data processing on received data using the 1×RS (544,514) scheme.

It should be noted that in the breakout scenarios shown in FIG. 12 and FIG. 13, an example in which the host chip sends four data streams to the optical module via four lanes is used for description. In some other possible scenarios, the host chip may alternatively send data to the optical module via other quantities of lanes. For example, the host chip sends two data streams to the optical module via two lanes. For another example, the host chip sends eight data streams to the optical module via eight lanes. For another example, the host chip sends 16 data streams to the optical module via 16 lanes.

FIG. 14 is a diagram of a structure of a communication apparatus according to an embodiment of this application. As shown in FIG. 14, the communication apparatus includes a processing unit 301, a transceiver unit 302, and a host chip 303. In a possible implementation, the communication apparatus is applied to a data transmitting side. The processing unit 301 is configured to perform step 101, step 102, and step 205. The transceiver unit 302 is configured to perform step 105, step 201 and step 206. The host chip 303 is configured to perform step 104. In another possible implementation, the communication apparatus is applied to a data receiving side. The processing unit 301 is configured to perform step 202. The transceiver unit 302 is configured to perform step 203 and step 204. The host chip 303 is configured to perform step 106. It should be understood that the communication apparatus provided in this embodiment of this application may alternatively be implemented in other manners. For example, division into the units in the foregoing apparatus is merely logical function division and may be other division in actual implementation. For example, multiple units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

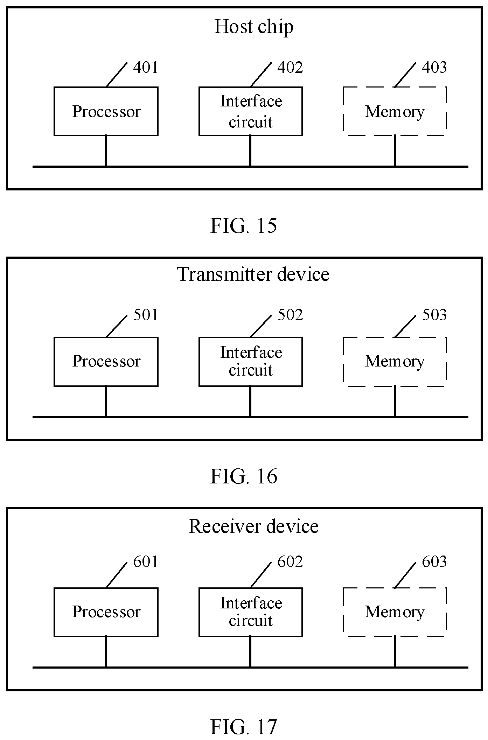

FIG. 15 is a diagram of a structure of a host chip according to an embodiment of this application. As shown in FIG. 15, the host chip includes a processor 401 and an interface circuit 402. It should be understood that the interface circuit 402 may be a transceiver or an input/output interface. The interface circuit 402 is configured to receive a signal from another apparatus other than the host chip, and transmit the signal to the processor 401, or send a signal from the processor 401 to another apparatus other than the host chip. In a possible implementation, the host chip is applied to a data transmitting side. The interface circuit 402 is configured to perform signal sending and receiving operations on the data transmitting side in the embodiments shown in FIG. 5 and FIG. 6. The processor 401 is configured to perform operations on the data transmitting side in the embodiments shown in FIG. 5 and FIG. 6 other than the signal sending and receiving operations. In another possible implementation, the host chip is applied to a data receiving side. The interface circuit 402 is configured to perform signal sending and receiving operations on the data receiving side in the embodiments shown in FIG. 5 and FIG. 6. The processor 401 is configured to perform operations on the data receiving side in the embodiments shown in FIG. 5 and FIG. 6 other than the signal sending and receiving operations. Optionally, the host chip may further include a memory 403, configured to store program instructions and data.

FIG. 16 is a diagram of a structure of a transmitter device according to an embodiment of this application. As shown in FIG. 16, the transmitter device includes a processor 501 and an interface circuit 502. It should be understood that the interface circuit 502 may be a transceiver or an input/output interface. The interface circuit 502 is configured to receive a signal from another apparatus other than the transmitter device and transmit the signal to the processor 501, or send a signal from the processor 501 to another apparatus other than the transmitter device. Specifically, the interface circuit 502 is configured to perform signal sending and receiving operations of the transmitter device in the embodiments shown in FIG. 5 and FIG. 6. The processor 501 is configured to perform operations of the transmitter device in the embodiments shown in FIG. 5 and FIG. 6 other than the signal sending and receiving operations. Optionally, the transmitter device may further include a memory 503, configured to store program instructions and data.

FIG. 17 is a diagram of a structure of a receiver device according to an embodiment of this application. As shown in FIG. 17, the receiver device includes a processor 601 and an interface circuit 602. It should be understood that the interface circuit 602 may be a transceiver or an input/output interface. The interface circuit 602 is configured to receive a signal from another apparatus other than the receiver device and transmit the signal to the processor 601, or send a signal from the processor 601 to another apparatus other than the receiver device. Specifically, the interface circuit 602 is configured to perform signal sending and receiving operations of the receiver device in the embodiments shown in FIG. 5 and FIG. 6, and the processor 601 is configured to perform operations of the receiver device in the embodiments shown in FIG. 5 and FIG. 6 other than the signal sending and receiving operations. Optionally, the receiver device may further include a memory 603, configured to store program instructions and data.

An embodiment of this application further provides a chip. The chip includes one or more interface circuits, and further integrates a processing circuit configured to implement functions of the processor 401, the processor 501, or the processor 601. In an example, a memory is integrated into the chip. In another example, when no memory is integrated into the chip, the chip may be connected to an external memory through an interface. The chip may complete the method steps in any one or more of the foregoing embodiments. Alternatively, the chip implements, according to the program code stored in the memory, the actions performed by the data processing apparatus in the foregoing embodiments.

An embodiment of this application further provides a computer-readable storage medium, including a program or instructions. When the program or the instructions are run on a computer, the method performed by the processor 401, the processor 501, or the processor 601 in the foregoing method embodiments is implemented.

It should be understood that, the processor mentioned in embodiments of this application may be implemented by hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may exist independently and is connected to the processor, or the memory may be integrated with the processor.

In an example, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor, or may be a processing circuit that implements a specific function.

In embodiments of this application, the memory may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist as discrete components in a network device or a terminal device.

All or some of the foregoing embodiments may be implemented by software, hardware, firmware, or any combination thereof.

When the data processing method is implemented by using hardware, the data processing method provided in embodiments of this application may not require reading software code or instructions. For example, the method may be implemented using a CPU, a DSP, an ASIC, an FPGA, another programmable logic device, a transistor logic device, a hardware component, or any combination thereof.

When software is used to implement embodiments, all or a part of the embodiments may be implemented in a form of a computer program product. The computer program product includes one or more computer programs or instructions. When the computer programs or the instructions are loaded and executed on a computer, the procedures or functions in embodiments of this application are fully or partially executed. The computer may be a general-purpose computer, a dedicated computer, a computer network, a network device, a terminal device, or another programmable apparatus. The computer program or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk drive, or a magnetic tape, may be an optical medium, for example, a digital versatile disc (digital versatile disc, DVD), or may be a semiconductor medium, for example, a solid state disk (solid state disk, SSD).

Finally, it should be noted that the foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, comprising:
obtaining a type of an optical module;
determining, based on the type of the optical module, a forward error correction FEC scheme for performing data processing on to-be-transmitted data; and
if the type of the optical module is a linear-drive pluggable optics LPO module, a near-package optics NPO module, or a co-packaged optics CPO module, performing, by a host chip, data processing on the to-be-transmitted data using a first FEC scheme.

2. The method according to claim 1, wherein performing, by the host chip, data processing on the to-be-transmitted data using the first FEC scheme comprises:
performing, by the host chip, data processing on the to-be-transmitted data using a multi-way codeword interleaving FEC scheme.

3. The method according to claim 2, wherein the multi-way interleaving FEC scheme is a 2-way codeword interleaving FEC scheme, a 4-way codeword interleaving FEC scheme, or an 8-way codeword interleaving FEC scheme.

4. The method according to any one of claims 1 to 3, wherein performing, by the host chip, data processing on the to-be-transmitted data using the first FEC scheme comprises:
encoding, by the host chip, the to-be-transmitted data by using a first FEC code.

5. The method according to claim 4, wherein the first FEC code is Reed-Solomon RS (544,514) or RS (528,514).

6. The method according to any one of claims 1 to 5, wherein if the type of the optical module is an LPO module, an NPO module, or a CPO module, the method further comprises:
initiating auto-negotiation to a receiver device, to indicate a host chip of the receiver device to perform data processing on received data using the first FEC scheme.

7. The method according to claim 6, wherein initiating auto-negotiation to the receiver device comprises:
sending a link codeword to the receiver device, wherein the link codeword comprises an indication field, and the indication field indicates the host chip of the receiver device to perform data processing on the received data using the first FEC scheme.

8. The method according to claim 7, wherein the indication field is located in a base page and/or a next page in the link codeword.

9. The method according to claim 8, wherein the indication field is located in a FEC capacity field of the base page.

10. The method according to any one of claims 7 to 9, wherein a rate at which the link codeword is transmitted is 106.25/X gigabits per second Gbps, and X is an integer greater than or equal to 1.

11. The method according to any one of claims 1 to 5, wherein if the type of the optical module is an LPO module, an NPO module, or a CPO module, the method further comprises:
initiating link training to a receiver device, to indicate a host chip of the receiver device to perform data processing on received data using the first FEC scheme.

12. The method according to claim 11, wherein initiating link training to the receiver device comprises:
sending a training frame to the receiver device, wherein the training frame comprises an indication field, and the indication field indicates the host chip of the receiver device to perform data processing on the received data using the first FEC scheme.

13. The method according to claim 12, wherein the indication field is located in a coefficient update field, a status report field, a control field, and/or a status field in the training frame.

14. The method according to claim 12 or 13, wherein a rate at which the training frame is transmitted is 106.25 Gbps or 103.125 Gbps.

15. The method according to any one of claims 1 to 14, wherein the method further comprises:
receiving auto-negotiation or link training initiated by the receiver device, wherein a type of a receiver optical module connected to the receiver host chip of the receiver device is an LPO module, an NPO module, or a CPO module, and the auto-negotiation or the link training initiated by the receiver device indicates the host chip to perform data processing on the to-be-transmitted data using the first FEC scheme.

16. The method according to any one of claims 1 to 15, wherein the method further comprises:
if the host chip is connected to a normal optical module, performing, by the host chip, data processing on the to-be-transmitted data using a second FEC scheme, wherein the normal optical module is not the LPO module, the NPO module, or the CPO module.

17. The method according to claim 16, wherein performing, by the host chip, data processing on the to-be-transmitted data using the second FEC scheme comprises:
performing, by the host chip, data processing on the to-be-transmitted data in a FEC scheme without codeword interleaving.

18. The method according to claim 16 or 17, wherein performing, by the host chip, data processing on the to-be-transmitted data using the second FEC scheme comprises:
encoding, by the host chip, the to-be-transmitted data using a second FEC code.

19. The method according to any one of claims 1 to 18, wherein the host chip transmits data to the optical module via one lane.

20. The method according to any one of claims 1 to 18, wherein the host chip respectively sends N streams of data to the optical module via N lanes, wherein N is an integer greater than 1;
performing, by the host chip, data processing on the to-be-transmitted data using the first FEC scheme comprises:
performing, by the host chip, data processing on a streams of to-be-transmitted data among the N streams of to-be-transmitted data using the first FEC scheme, wherein 1≤a≤N; and
the method further comprises:
performing, by the host chip, data processing on b streams of to-be-transmitted data among the N streams of to-be-transmitted data using the second FEC scheme, wherein N=a+b.

21. The method according to claim 19 or 20, wherein the lane is an attachment unit interface AUI or a common electrical interface CEI.

22. The method according to any one of claims 1 to 21, wherein the method further comprises:
receiving c streams of data that are sent by the receiver host chip of the receiver device after the c streams of data have been processed using the first FEC scheme, wherein c≥1; and/or
receiving d streams of data that are sent by the receiver host chip of the receiver device after the d streams of data have been processed using the second FEC scheme, wherein d≥1.

23. The method according to any one of claims 1 to 22, wherein a rate of each channel of data to be transmitted by the host chip is 100 Gbps.

24. The method according to claim 1, wherein the type of the optical module is an LPO module, a type of a receiver optical module connected to a receiver host chip of a receiver device is an LPO module, and the method further comprises:
receiving data that is sent by the receiver host chip after data processing has been performed using the first FEC scheme; or
the type of the optical module is an LPO module, a type of a receiver optical module connected to a receiver host chip of a receiver device is a normal optical module, and the method further comprises:
receiving data that is sent by the receiver host chip after data processing has been performed using a second FEC scheme.

25. The method according to claim 1, wherein the host chip respectively sends N streams of data to the optical module via N lanes, the type of the optical module is an LPO module, the N lanes are CEIs, and N=2, 4, 8, or 16; and
performing, by the host chip, data processing on the to-be-transmitted data using the first FEC scheme comprises:
performing, by the host chip, data processing on the N streams of to-be-transmitted data using the first FEC scheme.

26. The method according to claim 25, wherein the receiver device comprises N receiver host chips, a type of a receiver optical module connected to each of the receiver host chips is an LPO module, and the method further comprises:
receiving N streams of data that are respectively sent by the N receiver host chips after data processing has been performed using the first FEC scheme; or
the receiver device comprises N receiver host chips, a type of a receiver optical module connected to each of the receiver host chips is a normal optical module, and the method further comprises:
receiving N streams of data that are respectively sent by the N receiver host chips after data processing has been performed using a second FEC scheme.

27. The method according to claim 1, wherein the host chip respectively sends N streams of data to the optical module via N lanes, the optical module is an LPO module, and N=2, 4, 8, or 16;
performing, by the host chip, data processing on the to-be-transmitted data using the first FEC scheme comprises:
performing, by the host chip, data processing on M streams of to-be-transmitted data among the N streams of to-be-transmitted data using the first FEC scheme, wherein 1≤M<N; and
the method further comprises:
performing, by the host chip, data processing on N-M streams of to-be-transmitted data among the N streams of to-be-transmitted data using the second FEC scheme.

28. The method according to claim 27, wherein the receiver device comprises N receiver host chips, a type of a receiver optical module connected to M receiver host chips is an LPO module, a type of a receiver optical module connected to N-M receiver host chips is a normal optical module, and the method further comprises:
receiving M streams of data that are respectively sent by the M receiver host chips after the M streams of data have been processed using the first FEC scheme; and
receiving N-M streams of data that are respectively sent by the N-M receiver host chips after the N-M streams of data have been processed using the second FEC scheme.

29. The method according to any one of claims 25 to 28, wherein a transmission rate in each of the N lanes is 100 Gbps.

30. A data processing method, comprising:
receiving auto-negotiation or link training initiated by a transmitter device;
determining, based on the auto-negotiation or the link training, a forward error correction FEC scheme used for performing data processing on received data by a host chip; and
sending a feedback message to the transmitter device, wherein the feedback message indicates the FEC scheme.

31. The method according to claim 30, wherein receiving auto-negotiation initiated by the transmitter device comprises:
receiving a first link codeword sent by the transmitter device, wherein the first link codeword comprises a first indication field; and
determining, based on the auto-negotiation, the FEC scheme used for performing data processing on the received data by the host chip comprises:
determining the FEC scheme based on the first indication field.

32. The method according to claim 31, wherein the first indication field is located in a base page and/or a next page of the first link codeword.

33. The method according to claim 32, wherein the first indication field is located in a FEC capacity field of the base page in the first link codeword.

34. The method according to any one of claims 31 to 33, wherein sending the feedback message to the transmitter device comprises:
sending a second link codeword to the transmitter device, wherein the second link codeword comprises a second indication field, and the second indication field indicates the FEC scheme.

35. The method according to claim 34, wherein the second indication field is located in a base page and/or a next page in the second link codeword.

36. The method according to claim 35, wherein the second indication field is located in an acknowledgment ACK field of the base page in the second link codeword, and/or the second indication field is located in an ACK field of the next page in the second link codeword.

37. The method according to any one of claims 31 to 36, wherein a rate at which the first link codeword is transmitted is 106.25/X gigabits per second Gbps, and X is an integer greater than or equal to 1.

38. The method according to claim 30, wherein receiving link training initiated by the transmitter device comprises:
receiving a first training frame sent by the transmitter device, wherein the first training frame comprises a third indication field; and
determining, based on the link training, the FEC scheme used for performing data processing on the received data by the host chip comprises:
determining the FEC scheme based on the third indication field.

39. The method according to claim 38, wherein the third indication field is located in a coefficient update field, a status report field, a control field, and/or a status field in the first training frame.

40. The method according to claim 38 or 39, wherein sending the feedback message to the transmitter device comprises:
sending a second training frame to the transmitter device, wherein the second training frame comprises a fourth indication field, and the fourth indication field indicates the FEC scheme.

41. The method according to any one of claims 38 to 40, wherein a rate at which the first training frame is transmitted is 106.25 Gbps or 103.125 Gbps.

42. The method according to any one of claims 30 to 41, wherein if a type of a transmitter optical module connected to a transmitter host chip in the transmitter device is a linear-drive pluggable optics LPO module, a near-package optics NPO module, or a co-packaged optics CPO module, the FEC scheme is a first FEC scheme; and
if the type of the transmitter optical module connected to the transmitter host chip in the transmitter device is a normal optical module, the FEC scheme is a second FEC scheme.

43. The method according to any one of claims 30 to 42, wherein the method further comprises:
initiating auto-negotiation or link training to the transmitter device, to indicate a FEC scheme used for performing data processing on the received data by the transmitter host chip of the transmitter device.

44. The method according to claim 43, wherein if the type of the optical module connected to the host chip is an LPO module, an NPO module, or a CPO module, the auto-negotiation or the link training initiated to the transmitter device indicates the transmitter host chip to perform data processing on the received data using the first FEC scheme; and
if the type of the optical module connected to the host chip is a normal optical module, the auto-negotiation or the link training initiated to the transmitter device indicates the transmitter host chip to perform data processing on the received data using the second FEC scheme.

45. The method according to claim 42 or 44, wherein the first FEC scheme comprises at least one of a multi-way codeword de-interleaving FEC scheme and a decoding method in which a first FEC code is used, and the second FEC scheme comprises at least one of a FEC scheme without codeword de-interleaving and a decoding method in which a second FEC code is used.

46. A communication apparatus, comprising a processing unit and a host chip, wherein
the processing unit is configured to obtain a type of an optical module; and
determine, based on the type of the optical module, a forward error correction FEC scheme for performing data processing on to-be-transmitted data; and
if the type of the optical module is a linear-drive pluggable optics LPO module, a near-package optics NPO module, or a co-packaged optics CPO module, the host chip is configured to perform data processing on the to-be-transmitted data using a first FEC scheme.

47. A communication apparatus, comprising a transceiver unit, a processing unit, and a host chip, wherein
the transceiver unit is configured to receive auto-negotiation or link training initiated by a transmitter device;
the processing unit is configured to determine, based on the auto-negotiation or the link training, a forward error correction FEC scheme used for performing data processing on received data by the host chip; and
the transceiver unit is configured to send a feedback message to the transmitter device, wherein the feedback message indicates the FEC scheme.

48. A chip, wherein the chip comprises a processor, and the processor is configured to perform the method according to any one of claims 1 to 45.

49. A host chip, wherein the host chip comprises a processor and an interface circuit, the interface circuit is configured to send and receive a signal, and the processor is configured to perform the method according to any one of claims 1 to 45.

50. A transmitter device, wherein the transmitter device comprises a processor and an interface circuit, the interface circuit is configured to send and receive a signal, and the processor is configured to perform the method according to any one of claims 1 to 29.

51. A receiver device, wherein the receiver device comprises a processor and an interface circuit, the interface circuit is configured to send and receive a signal, and the processor is configured to perform the method according to any one of claims 30 to 45.

52. A communication system, comprising a receiver device and the transmitter device according to claim 50.

53. A communication system, comprising a transmitter device and the receiver device according to claim 51.

54. A computer-readable storage medium, wherein the computer-readable storage medium stores instructions, and when the instructions are executed by a computer, the method according to any one of claims 1 to 45 is performed.
